# DEMANDE DE BREVET EUROPEEN

(11) **EP 0 717 556 A1**
(43) Date de publication de la demande: **19.06.1996**
(21) Numéro de dépôt: 95402507.8
(22) Date de dépôt: 09.11.1995
(51) Int. Cl.: H04N 3/15

(54) **Procédé de lecture de photodétecteur associé à un circuit intégrateur, circuit pour la mise en oeuvre du procédé et ensemble de détection comportant le circuit**

(30) Priorité: 15.12.1994 FR 9415127
(71) Demandeur: SAT (Société Anonyme de Télécommunications), F-75116 Paris (FR)
(72) Inventeur: Carre, Eric, F-75625 Paris Cedex 13 (FR); Martinez, Alain, F-75625 Paris Cedex 13 (FR); Leblanc, Dominique, F-75625 Paris Cedex 13 (FR)
(74) Mandataire: Bloch, Gérard

(57) **Abrégé**

Procédé et circuit de lecture d'au moins un photo-détecteur (11) d'alimentation en charges électriques d'un circuit intégrateur (15), en fonction de l'éclairement du photo-détecteur (11), le circuit intégrateur (15) étant dans un état de charge initial qui est prédéterminé, dans lequel, après polarisation (Vpol) et une période déterminée d'intégration des charges, on lit la charge du circuit intégrateur (15) avant de le remettre dans l'état de charge initial lors d'un temps mort au cours duquel on inhibe le photo-détecteur (11).

Application aux appareils de prise de vue.

## Description

La présente invention concerne un procédé de lecture d'au moins un photo-détecteur d'alimentation en charges électriques d'un circuit intégrateur, en fonction de l'éclairement du photo-détecteur, le circuit intégrateur étant dans un état de charge initial qui est prédéterminé, dans lequel, après polarisation et une période déterminée d'intégration des charges, on lit la charge du circuit intégrateur avant, lors d'un temps mort, de remettre le circuit dans l'état de charge initial.

Les photo-détecteurs sont d'un emploi courant dans divers domaines, que ce soit dans la détection d'incendie, le réglage de sensibilité d'appareils de prise de vue ou l'acquisition, en temps réel, de l'image d'un paysage au moyen d'une caméra. Dans ce dernier cas, on utilise des caméras équipées d'une pluralité de photo-détecteurs élémentaires recevant chacun un point de l'image du paysage et alimentant un circuit de restitution d'image.

Le fonctionnement d'un photo-détecteur, polarisé à une tension fixe par un circuit de commande, peut être assimilé à celui d'une source de courant électrique dont la valeur, au demeurant faible, dépend de l'éclairement. Pour des raisons pratiques, la mesure du courant est souvent effectuée après intégration.

L'intégrateur comporte un puits de potentiel d'entrée, assimilable à un condensateur contenant une quantité initiale connue de charges électriques; ce condensateur est déchargé partiellement et cycliquement à travers le photo-détecteur. On mesure ensuite, en fin de cycle, la perte de charges, et on recharge le condensateur pour un nouveau cycle.

Cependant, si le temps de cycle varie de façon imprévisible, la perte de charges suit ces variations et ne dépend plus uniquement du seul éclairement, dont la mesure n'est plus alors possible ou est entachée d'erreur.

C'est par exemple le cas pour une barrette de photo-détecteurs de caméra infra-rouge, sur laquelle un dispositif de balayage optique projette successivement des bandes adjacentes de l'image du paysage observé, qui sont lues au même rythme pour constituer ensemble un signal vidéo de l'image totale. Comme le dispositif de balayage n'est pas entraîné de façon parfaitement régulière dans le temps, les cycles de lecture de la barrette sont asservis sur le passage par des positions angulaires prédéterminées du dispositif de balayage, ce qui évite tout déphasage incontrôlé entre les signaux fournis par les photo-détecteurs.

Pour supprimer l'effet de l'irrégularité des durées des cycles de lecture qui en résulte et fausse la mesure de l'éclairement, il est connu de décomposer le cycle de lecture T0 (figure 5A) en une période utile T1, de durée fixe, suivie d'un court temps mort variable T2, de garde, se terminant peu après l'arrivée d'une commande d'activation, ou de synchronisation, Vs (figure 5B), pour un nouveau cycle, provenant du dispositif de balayage. On supprime alors (figure 5D) la variation de charge du condensateur intervenue pendant le temps mort variable, afin de ramener sa charge à la valeur prédéterminée initiale et ainsi ne mesurer, après écoulement de la période utile du nouveau cycle, que la variation de charge intervenue pendant la durée fixe de celui-ci.

Cependant, le circuit de suppression des charges induites pendant le temps mort, ou d'anti-éblouissement, qui doit avoir une action rapide pour éviter une perte inutile de temps et donc de sensibilité de détection, perturbe fortement, par couplage parasite, la tension de polarisation des photo-détecteurs, polarisation que détermine leur caractéristique résistance/éclairement. D'autres signaux parasites étrangers à la barrette, peuvent avoir le même effet. Comme la qualité de la régulation de cette tension de polarisation est essentielle pour la qualité de cette caractéristique, la perturbation indiquée ci-dessus a des effets inacceptables qui sont mémorisés dans les photo-détecteurs et qui, se poursuivant après la fin de l'action du circuit anti-éblouissement, sont donc perçus dans le signal lu.

L'invention vise à s'affranchir des perturbations du signal intégré d'un photo-détecteur dues aux irrégularités des cycles de lecture de ce signal et aux mesures éventuellement prises pour tenter d'en atténuer les défauts qu'elles engendrent.

A cet effet, l'invention concerne un procédé du type mentionné ci-dessus, caractérisé par le fait qu'on inhibe le photo-détecteur pendant le temps mort.

Ainsi, et aussi surprenant que cela puisse paraître, la solution au problème ci-dessus n'était pas de chercher à maintenir les conditions de fonctionnement du photo-détecteur en améliorant la régulation de sa tension de polarisation mais, au contraire, de modifier ses conditions de fonctionnement, en l'inhibant.

On peut ainsi procéder à la remise à l'état initial du circuit intégrateur, avec élimination des charges excédentaires du temps mort, dans un intervalle de temps pour lequel le photo-détecteur est inhibé et ne peut donc pas mémoriser les perturbations dues à l'action de remise à l'état initial du circuit intégrateur ou à toute autre perturbation.

Avantageusement, l'inhibition est effectuée par modification de la polarisation fonctionnelle du photo-détecteur.

Il est ainsi nul besoin d'ajouter une entrée de commande du photo-détecteur.

Avantageusement encore, on arrête l'inhibition du photo-détecteur après arrêt de la phase de réinitialisation du circuit intégrateur.

On élimine ainsi avec certitude les effets perturbateurs de la phase de réinitialisation du circuit intégrateur, en formant une fenêtre temporelle de mise au repos entièrement comprise dans la durée de l'inhibition.

L'invention concerne aussi un circuit pour la mise en oeuvre du procédé de l'invention, agencé pour polariser de façon opérationnelle au moins un photo-détecteur d'alimentation en charges électriques d'un circuit intégrateur, selon l'éclairement du photo-détecteur, et pour remettre cycliquement, après lecture, ledit circuit intégrateur dans un état de charge initial prédéterminé, caractérisé par le fait qu'il est agencé pour inhiber le fonctionnement du photo-détecteur.

L'invention porte enfin sur un ensemble de détection comportant une pluralité de photo-détecteurs pour, en fonction de leur éclairement, alimenter en charges électriques, à travers un circuit intégrateur, un circuit de lecture à transfert de charges, caractérisé par le fait qu'il comporte le circuit de l'invention.

L'invention sera mieux comprise à l'aide de la description suivante de la forme de réalisation préférée de l'ensemble de détection comportant le circuit de lecture pour la mise en oeuvre du procédé de l'invention, en référence au dessin annexé, sur lequel :
- la figure 1 est un schéma par blocs de l'ensemble de détection à photo-détecteurs, comportant le circuit de commande de l'invention,
- la figure 2 est un schéma électrique d'un photo-détecteur avec intégrateur,
- la figure 3 est un schéma électrique équivalent des éléments de la figure 2,
- la figure 4 représente le circuit de commande de l'invention, et
- la figure 5, formée des figures 5A, 5B, 5C, 5D et 5E illustre le séquencement du fonctionnement de l'ensemble de détection.

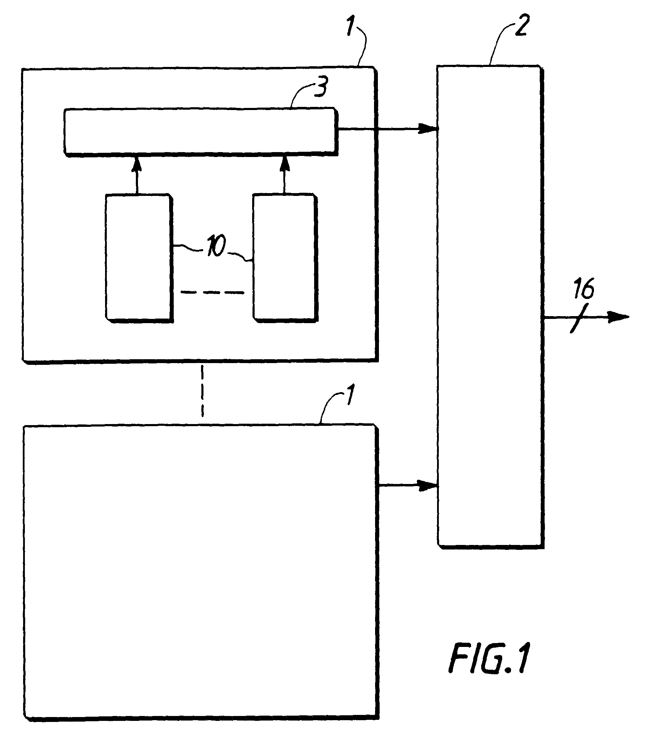

L'ensemble de détection de la figure 1 est intégré dans une caméra infrarouge, non représentée, dans laquelle un dispositif de balayage applique successivement des bandes d'image adjacentes sur quatre barrettes formant au total 288 lignes de quatre éléments ponctuels d'image.

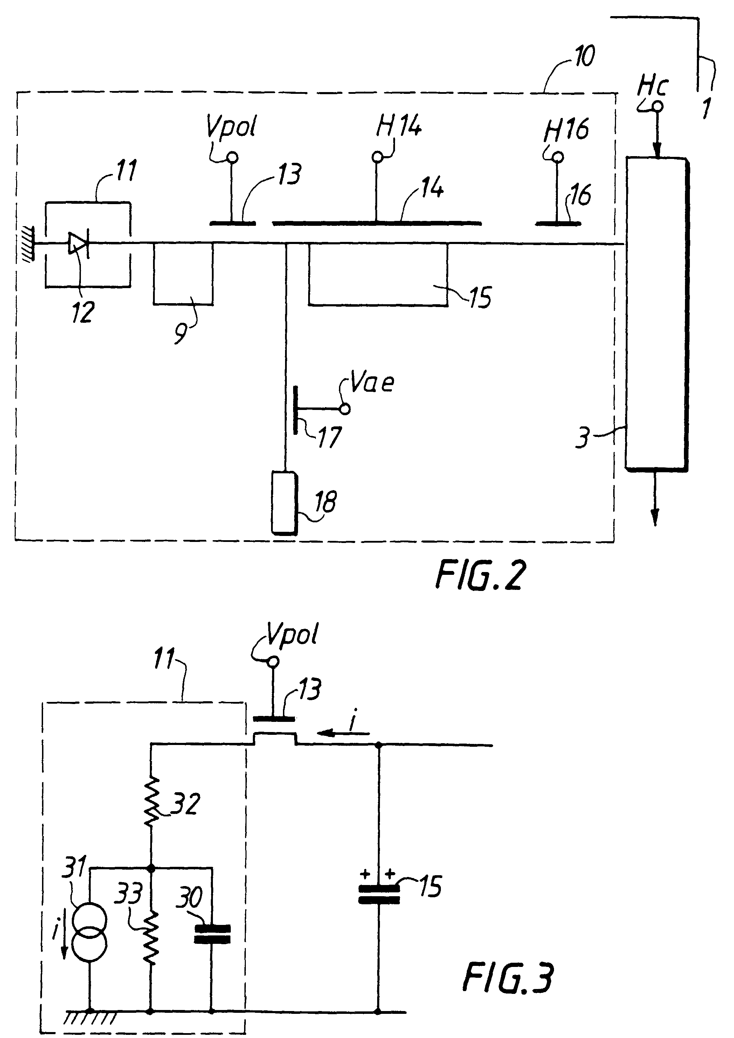

Chacune des 288 lignes d'analyse est constituée d'un bloc 1 comportant quatre circuits 10 comprenant respectivement les quatre photo-détecteurs 11 d'une des lignes (figure 2) reliés, à travers des transistors MOS de commande et de lecture, aux entrées parallèles d'un circuit 3 à transfert de charges (CCD). Les circuits CCD 3 sont reliés en sortie à un multiplexeur 2 à seize voies traitant chacune dix-huit circuits CCD 3. Les seize sorties du multiplexeur 2 alimentent un circuit de sortie vidéo, non représenté.

L'ensemble des blocs 1 est réalisé sur un même substrat semi-conducteur dans lequel ont été diffusés des transistors MOS.

Comme le montrent les figures 2 et 3, chaque photo-détecteur 11 comporte une diode photo-sensible 12 polarisée en inverse, dont l'anode est à la masse et dont la cathode est reliée à un caisson de matériau dopé 9 qui forme la source d'un pseudo transistor MOS constitué d'une électrode de grille 13, polarisée à une tension Vpol, et du drain virtuel qui est la zone d'inversion située sous une électrode de grille 14 polarisée à une tension fixe H14. Cette zone d'inversion de charge constitue un puits de potentiel 15 dans lequel sont intégrées les charges délivrées par le photo-détecteur 11.

Une électrode de grille 16 commande, du côté schématiquement opposé à l'électrode 13, un autre transistor MOS reliant le puits de potentiel 15 à une entrée du circuit CCD 3 considéré. Le puits de potentiel 15 est aussi relié à une électrode de source 18, à potentiel fixe, d'un transistor MOS commandé par son électrode de grille 17.

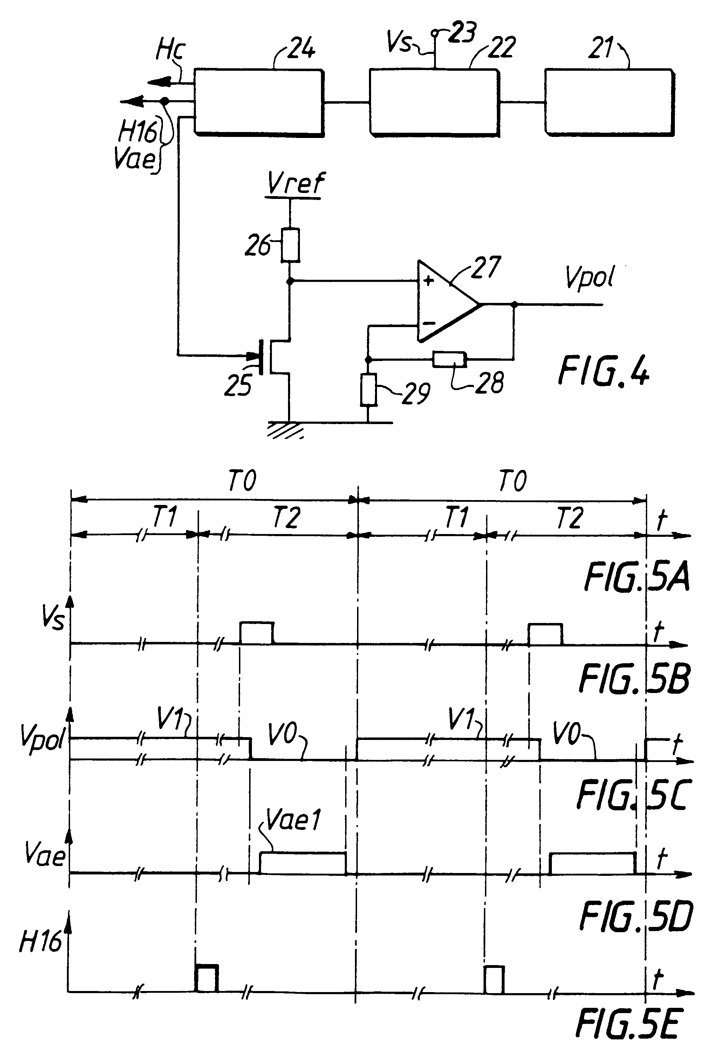

Le circuit de commande fournissant la tension Vpol, représenté sur la figure 4, comporte un amplificateur opérationnel 27, avec un pont diviseur 28, 29 en rétroaction sur l'entrée inverseuse. Son entrée non inverseuse est reliée, à travers une résistance 26, à une tension de référence Vréf, précise et filtrée, et à un interrupteur électronique 25, représenté très schématiquement, de rappel à la masse, ici un seul transistor. Un oscillateur à quartz 21 commande une base de temps 22 adressant une mémoire numérique 24 contenant des tables de formes d'onde de signaux binaires et reliée en sortie à une entrée de commande, ici la grille, de l'interrupteur 25. Une borne d'entrée 23 de la base de temps 22 reçoit un signal externe de synchronisation Vs, provenant du dispositif de balayage.

L'une des formes d'onde de la mémoire 24 correspond à une impulsion de commande de fermeture de l'interrupteur 25 tandis que d'autres formes d'onde représentent les commandes H16 (fig. 5E) et Vae des électrodes respectives 16 et 17, ainsi que des signaux d'horloge de transfert H_{c} des circuits CCD 3.

Le fonctionnement, et tout d'abord le séquencement, des circuits ci-dessus va maintenant être expliqué.

Comme le montre la figure 5, pour laquelle le temps t est porté en abscisse, un cycle de lecture du photo-détecteur 11 s'étend sur une période T0 constituée d'une période utile de durée T1, fixe, et d'une période de durée T2, ou temps mort, variable.

Il est représenté deux des périodes T0 successives, le début de la deuxième période T0 intervenant après une séquence de commandes se produisant pendant le temps mort T2 de la première période T0.

On va décrire ci-après la séquence des commandes ci-dessus, qui effectuent une réinitialisation du circuit 10, puis le fonctionnement de ce dernier pendant la période utile T1 de la deuxième période T0, pour mesurer la charge du condensateur 15.

Lors de la période T2 de la première période T0, la réception du signal de synchronisation Vs sur la borne 23 de la base de temps 22 va relancer une nouvelle période utile T1, la deuxième sur la figure 5. Pour cela, les charges induites dans le puits 15 par le photo-détecteur 11 en début de la période T2 considérée, ainsi que les charges résiduelles, provenant de l'intégration au cours de la période T1 précédente et non transférées dans le circuit CCD 3, vont être éliminées. A cet effet, le signal de synchronisation Vs, agissant sur la base de temps 22, engendre, par l'intermédiaire de la mémoire 24, une séquence de signaux. La mémoire 24 forme ainsi, avec la base de temps 22 qui la contrôle, un séquenceur asservi sur le signal Vs.

Tout d'abord, l'interrupteur 25 est fermé par un changement d'état du signal qui le commande, ce qui fait commuter la tension Vpol (figure 5C) d'une valeur positive V1, de polarisation fonctionnelle, à une valeur V0 nulle, et inhibe ainsi le photo-détecteur 11.

Ensuite, la mémoire 24 produit une impulsion Vae (figure 5D), ici Vae1, appliquée à la grille 17 du transistor anti-éblouissement, qui évacue alors les charges induites, depuis la fin de la période utile T1, dans le puits 15 par le photo-détecteur 11 ainsi que les charges résiduelles provenant de l'intégration au cours de la période T1 précédente. Dans cet exemple, la remontée de la tension Vpol de la valeur d'inhibition V0 à la valeur fonctionnelle V1 n'intervient qu'après la fin de l'impulsion Vae1, c'est-à-dire que l'impulsion Vae1 a lieu pendant une fenêtre temporelle située dans la durée de l'impulsion négative d'inhibition de Vpol.

La remontée de la tension Vpol détermine en fait le début de la deuxième période utile T0 de la figure 5, pendant laquelle intervient la mesure des charges, comme expliqué ci-dessous.

Comme indiqué précédemment, le diode photo-sensible 12 décharge partiellement le condensateur 15 pendant la durée T1 lors de la deuxième période T0. La durée T1 est fixée par la base de temps 22.

En fin de la période utile T1 de la deuxième période T0, l'électrode 16 reçoit de la mémoire 24 la commande H16 de transfert, pour lecture du puits 15 par transfert de ses charges vers le circuit CCD 3 associé. La réinitialisation du circuit intégrateur 15, c'est-à-dire la remise dans l'état de charge prédéterminée initial du puits 15, s'effectue par activation du signal d'horloge Vae au cours de la période T2. Le circuit intégrateur est alors prêt pour un nouveau cycle de mesure. Le circuit CCD 3 reçoit ainsi une quantité de charges fonction de l'éclairement pendant la durée fixe T1.

Le séquencement des opérations indiqué ci-dessus se reproduit à nouveau pour les périodes T0 suivantes.

Le schéma électrique équivalent de la figure 3 permet de mieux comprendre l'intégration effectuée sur le signal du photo-détecteur 11. La diode 12 de celui-ci est équivalente à un générateur de courant 31, de débit i fonction de l'éclairement, avec une résistance série 32 et, en parallèle, un condensateur parasite 30 et une résistance de fuite parasite 33, de valeur élevée.

Le courant i du générateur de courant 31 décharge lentement le condensateur que constitue le puits 15 tant que la tension Vpol est à l'état haut V1.

Le passage à l'état bas V0 de la tension Vpol après mesure et recharge du puits 15, inhibe la photo-diode 12 et, en particulier, évite que le condensateur parasite 30 ne stocke des charges dues aux perturbations, que ne pourrait éliminer entièrement le transistor anti-éblouissement 17-18 car elles seraient restituées avec un retard dépassant nettement la durée de l'impulsion Vae.

On comprendra que l'inhibition du photo-détecteur 11 peut être effectuée de toute manière appropriée, éventuellement par une modification de ses conditions de fonctionnement autre que l'interruption de la polarisation de sa cathode ici décrite.

## Revendications

1. Procédé de lecture d'au moins un photo-détecteur (11) d'alimentation en charges électriques d'un circuit intégrateur (15), en fonction de l'éclairement du photo-détecteur (11), le circuit intégrateur (15) étant dans un état de charge initial qui est prédéterminé, dans lequel, après polarisation (Vpol) et une période déterminée d'intégration des charges, on lit la charge du circuit intégrateur (15) avant, lors d'un temps mort, de remettre le circuit (15) dans l'état de charge initial, procédé caractérisé par le fait qu'on inhibe le photo-détecteur (11) pendant le temps mort.

2. Procédé selon la revendication 1, dans lequel l'inhibition est effectuée par modification de la polarisation opérationnelle (13, Vpol) du photo-détecteur (11).

3. Procédé selon la revendication 2, dans lequel on arrête l'inhibition (13) du photo-détecteur (11) après arrêt de l'initialisation du circuit intégrateur (15).

4. Circuit pour la mise en oeuvre du procédé de la revendication 1, agencé pour polariser de façon opérationnelle (Vpol) au moins un photo-détecteur (11) d'alimentation en charges électriques d'un circuit intégrateur (15), selon l'éclairement du photo-détecteur (11), et pour remettre cycliquement, après lecture, ledit circuit intégrateur (15) dans un état de charge initial prédéterminé, caractérisé par le fait qu'il est agencé pour inhiber (25-27, 13) le fonctionnement du photo-détecteur (11).

5. Circuit selon la revendication 4, dans lequel l'inhibition est effectuée par modification de la polarisation opérationnelle (13, Vpol) du photo-détecteur (11).

6. Circuit selon les revendications 4 et 5, dans lequel il est prévu des moyens séquenceurs (21-24) pour commander l'initialisation du circuit intégrateur (15) après commande de l'inhibition (Vs) du photo-détecteur (11).

7. Circuit selon la revendication 6, dans lequel les moyens séquenceurs comportent une mémoire (24) agencée pour fournir lesdites commandes sous le contrôle d'une base de temps (22).

8. Circuit selon la revendication 7, dans lequel la mémoire (24) est agencée pour fournir des signaux d'horloge de transfert (Hc) à un circuit (3), à transfert de charges, de lecture du circuit intégrateur (15).

9. Circuit selon l'un des revendications 4 à 8, dans lequel il est prévu un amplificateur opérationnel (27) pour fournir la polarisation opérationnelle (Vpol) du photo-détecteur (11).

10. Ensemble de détection comportant une pluralité de photo-détecteurs (11) pour, en fonction de leur éclairement, alimenter en charges électriques, à travers un circuit intégrateur (15), un circuit de lecture à transfert de charges (3), caractérisé par le fait qu'il comporte le circuit de la revendication 4.
